# DEMANDE DE BREVET EUROPEEN

(11) **EP 1 041 212 A1**
(43) Date de publication de la demande: **04.10.2000**
(21) Numéro de dépôt: 00400497.4
(22) Date de dépôt: 24.02.2000
(51) Int. Cl.: E04C 2/54

(54) **Plaques anti-fragmentation en polymère thermoplastique, notamment polymère acrylique et leur utilisation comme murs antibruit**

(30) Priorité: 30.03.1999 FR 9903940
(71) Demandeur: Atofina, 92800 Puteaux (FR)
(72) Inventeur: Marcarian, Xavier, 64140 Billere (FR); Omerin, Pierre, 63600 Ambert (FR)
(74) Mandataire: Luziau, Nelly

(57) **Abrégé**

Les plaques antifragmentation en matière polymère thermoplastique comprennent au moins un réseau de brins adhérant à la matière polymère thermoplastique constituant les plaques, chaque brin du réseau étant noyé dans la matière polymère thermoplastique constituant les plaques à proximité immédiate d'au moins une face desdites plaques.

Application aux murs antibruit.

## Description

L'invention est relative à des plaques anti-fragmentation en matière polymère thermoplastique, particulièrement en polymère (méth)acrylique.

Des plaques en matière polymère, sous l'impact d'un matériau contondant, peuvent se casser et former des morceaux ou fragments. La casse de telles plaques, lorsqu'elles sont utilisées sur des voies publiques, crée donc un danger pour le milieu environnant. Ceci est particulièrement le cas lorsque ces plaques sont utilisées comme murs antibruit et installées le long des autoroutes, des ponts, etc....

Il a donc été recherché des moyens pour éviter que les fragments de ces plaques en matière polymère ne tombent sur les voies publiques.

Un tel moyen a été décrit dans le brevet européen EP-B-407 852. Selon ce brevet, des plaques en verre acrylique (ou (co)polymère méthacrylique) utilisées comme murs ou écrans antibruit contiennent, enrobés à peu près au milieu de la section des plaques, des monofilaments en matière plastique. Ces monofilaments retiennent les morceaux cassés et évitent donc leur chute. Conviennent particulièrement bien des monofilaments en polyamide par suite de l'adhérence relativement faible entre ces filaments et le verre acrylique constituant les plaques. Lors de l'impact d'un objet contondant sur la plaque, celle-ci se casse, mais les monofilaments se tendent et ne sont pas rompus, tout au moins une grande partie d'entre eux.

On a remarqué que, sous l'effet du choc, par suite de la résistance à la traction des monofilaments et de leur faible adhérence au verre acrylique, les monofilaments glissent dans la plaque sans s'en extraire totalement. L'effet obtenu est la rétention des morceaux par les monofilaments. Il est donc essentiel de bien contrôler l'adhérence des monofilaments au verre acrylique car une adhérence trop élevée entraînerait la rupture des monofilaments au moment du choc. Une adhérence trop faible provoquerait l'extraction complète des monofilaments et, par suite, la non- rétention des fragments de la plaque.

La présente invention a donc pour objet un nouveau moyen, utilisable dans des plaques en matière polymère thermoplastique, leur conférant une propriété que nous appelons antifragmentation, c'est-à-dire évitant la chute des morceaux ou fragments résultant de l'impact d'un objet contondant sur ces plaques.

Les plaques antifragmentation en matière polymère thermoplastique, selon l'invention, contiennent au moins un réseau de brins adhérant à la matière polymère thermoplastique constituant les plaques, chaque brin du réseau étant noyé dans la matière polymère thermoplastique constituant les plaques à proximité immédiate d'au moins une face desdites plaques.

Le réseau utilisé dans les plaques selon l'invention consiste en un ensemble de brins, de préférence, parallèles dans une même direction ou dans plusieurs directions constituant alors un maillage ou filet. Les brins parallèles sont espacés généralement de 10 mm à 300 mm, de préférence de 30 mm à 150 mm. Lorsque les brins constituent un maillage suivant deux directions formant, par exemple, un angle de 90°, la distance entre les brins parallèles selon ces deux directions peut être identique ou différente.

Le diamètre des brins peut varier en fonction de l'épaisseur de la plaque. Il est généralement de 0,2 à 3 mm et, de préférence, de 1,5 à 2,5 mm.

Les brins, utilisés dans les plaques selon l'invention, doivent adhérer à la matière polymère thermoplastique constituant les plaques de manière à éviter tout glissement des brins dans les plaques.

Pour cela, les brins peuvent être constitués par des monofilaments formés d'une matière permettant l'adhérance souhaitée au polymère thermoplastique constituant les plaques; par exemple, ces monofilaments peuvent être formés d'un polymère comportant des groupements polaires lorsque ces monofilaments sont utilisés dans des plaques en (co)polymère (méth)acrylique. Ces brins peuvent aussi être traités chimiquement (par exemple par un liant du polymère thermoplastique) ou mécaniquement (par exemple pour augmenter sa rugosité).

Les brins utilisables dans l'invention peuvent aussi être constitués, chacun, d'un enchevêtrement de filaments (on parlera de brins multifilaments). Ce mode de réalisation est préféré. Ces brins peuvent alors présenter différentes structures; par exemple, ils peuvent se présenter sous la forme d'une corde, d'une tresse ou tout autre forme, du moment qu'ils sont constitués par une association de plusieurs filaments. Chaque filament constituant les brins multifilaments peut se présenter sous la forme de monofilament ou de multifilament. Les brins multifilaments peuvent aussi avoir une structure plus complexe ; ainsi, ils peuvent être constitués d'une âme, formée par exemple de multifilaments, enserrée dans une gaine du type tresse ou corde, c'est-à-dire dans une gaine formée de filaments enchevêtrés.

Les filaments peuvent être constitués par toute matière pouvant former des enchevêtrements tels que tresse, corde. En particulier, ils peuvent être formés de fils en matière polymère comme du polyamide, des polyesters tels que du polytéréphtalate d'éthylène ; ce peut être aussi des fils métalliques (fils de cuivre par exemple), des fibres textiles naturelles comme du coton.

Selon l'invention, les brins adhérant au polymère thermoplastique se situent à proximité immédiate d'au moins une face des plaques. Par « proximité immédiate », on entend que l'épaisseur de matière polymère thermoplastique recouvrant les brins est très faible, par exemple de 0,05 à 4 mm environ, c'est-à-dire que la distance de la surface de chaque brin par rapport à la face la plus proche est de 0,05 à 4 mm environ. Il est ainsi possible que les brins affleurent la surface des plaques.

La matière polymère constituant les plaques antifragmentation peut être notamment du polycarbonate, des polymères du méthacrylate de méthyle comprenant de 80 % à 100 % en poids de méthacrylate de méthyle et de 0 à 20 % en poids de monomère(s) ayant au moins une insaturation éthylénique copolymérisable avec le méthacrylate de méthyle. Ces monomères sont bien connus et on peut citer, en particulier, les acides acrylique et méthacrylique, les acrylates d'alkyle dans lesquels le groupement alkyle a de 2 à 4 atomes de carbone.

En particulier, les plaques en polymère de méthacrylate de méthyle ou en copolymère comportant majoritairement des motifs issus du monomère méthacrylate de méthyle (MAM) peuvent être préparées par différents procédés et notamment, par extrusion (et dans ce cas, les brins sont introduits dans la plaque selon l'invention par pultrusion), par procédé coulé ou coulé continu bien connu.

Pour la mise en oeuvre du procédé coulé, on utilise un moule formé de deux plaques planes, par exemple en verre inorganique, séparées par un joint périphérique (appelé jonc), généralement en polychlorure de vinyle, assurant l'étanchéité entre les deux plaques. La fermeture du moule est assurée par des pinces placées sur les côtés.

Comme il est bien connu, on verse dans le moule la composition à polymériser, c'est-à-dire du monomère MAM ou bien du sirop formé de prépolymère de méthacrylate de méthyle (taux de conversion de 5-20 %) à laquelle on a ajouté un initiateur de polymérisation en quantité suffisante pour polymériser le MAM ou compléter la polymérisation du sirop suivant le cas et, éventuellement, d'autres additifs usuels comme un agent de réticulation, un agent de démoulage, un agent de transfert de chaîne pour contrôler la masse moléculaire du polymère final, un agent antioxydant, etc. La polymérisation est réalisée ou achevée suivant le cas en plaçant le moule dans l'eau (procédé dit « en piscine ») ou en étuve à la température nécessaire (40-80°C), puis en étuve (à 100-130°C environ) pour la postpolymérisation.

L'épaisseur du jonc détermine l'épaisseur de la plaque de polymère obtenue.

Pour obtenir une plaque antifragmentation selon l'invention, on place le réseau de brins dans le moule au contact de la face interne d'au moins une des plaques formant le moule, puis on introduit la composition à polymériser et on réalise la polymérisation de la manière habituelle.

Après polymérisation, les brins sont intimement liés au polymère, voire imprégnés de polymère, et sont recouverts d'une très faible épaisseur de polymère. Parfois, ils peuvent pratiquement affleurer la surface de la plaque. La surface de la plaque reste cependant parfaitement lisse. Son aspect de surface correspond à celui de la face interne du moule.

Les plaques obtenues peuvent avoir une épaisseur de 3 mm à 30 mm, suivant l'utilisation envisagée.

Lors de l'utilisation des plaques selon l'invention, l'une quelconque des faces de ces plaques peut être exposée à l'impact ; de préférence c'est la face opposée à celle comprenant les brins qui est exposée à l'impact.

Le principe de la rétention des fragments de plaques en polymère repose sur le fait que les brins sont intimement liés au polymère constituant la plaque et se trouvent à proximité immédiate d'une face de cette plaque. Dans certains cas, (comme décrit à l'exemple 1) lors du choc, des brins, sur une certaine longueur,à l'endroit cassé, sont arrachés sans rupture. La portion non arrachée des brins liés intimement au polymère maintient les fragments, évitant ainsi la chute et l'éparpillement des fragments. Dans d'autres cas, (comme décrit à l'exemple 3) on observe des lignes de cassure et des lignes de fracture périphériques semblant jouer le rôle d'articulation pour les parties délimitées par deux lignes de cassure consécutives.

Les plaques antifragmentation selon l'invention sont particulièrement utilisables comme murs anti-bruit. Dans ce cas, l'épaisseur des plaques est avantageusement comprise entre 10 mm et 25 mm de manière à obtenir l'effet d'insonorisation suffisant.

Les exemples suivants concernent des plaques antifragmentation servant de murs anti-bruit.

### Exemple 1 :

On utilise un moule formé de deux plaques en verre inorganique de dimension 2 m x 3 m et d'un jonc permettant d'obtenir une plaque d'une épaisseur de 15 mm.

Au contact d'une des faces internes du moule, on place un réseau de brins parallèles suivant une seule direction. Ces brins, de 2 mm de diamètre, sont constitués par le produit vendu par Tresse Industrie sous la dénomination « Bride Dyneema CVBR 140K® ». Ils sont constitués par une âme formée de multifilaments en polyéthylène haute tenacité enrobée d'une tresse de filaments en polytéréphtalate d'éthylène.

Ces brins sont parallèles les uns par rapport aux autres et distants de 3 cm. On introduit dans le moule la composition à polymériser (sirop de prépolymère de méthacrylate de méthyle et initiateur de polymérisation). Le moule est placé dans l'eau à une température de 70°C environ, puis en étuve à 120°C environ pour achever la polymérisation.

Après démoulage, on obtient une plaque de polyméthacrylate de méthyle d'une épaisseur de 15 mm.

Le test utilisé pour vérifier l'antifragmentation de la plaque est un test d'impact de la plaque par une masse pendulaire de forme biconique de 542 kg suspendue par l'un des sommets des cônes à l'extrémité d'un câble d'une grue. On ajuste l'énergie de l'impact en réglant la différence de hauteur de la masse entre son point de départ et le point d'impact. Dans l'exemple, l'énergie est de 6 900 joules. Dans ce test, la plaque est maintenue verticalement.

Dans cet exemple, l'impact a lieu sur la face comportant les brins.

Comme indiqué précédemment, on observe des lignes de fracture en forme d'étoiles. Aucun fragment n'est éjecté. Dans la zone d'impact, des parties de brins multifilaments ont été partiellement extraites de la plaque ; les fragments cassés restent attachés à l'ensemble de la plaque grâce aux parties des multifilaments restant noyés dans la plaque et imprégnés de polymère.

### Exemple 2 :

On opère comme à l'exemple 1, mais le réseau de brins (multifilaments) est constitué par un maillage, les brins parallèles selon une première direction étant espacés de 3 cm et les brins parallèles selon une deuxième direction étant espacés de 12 cm.

Avec le test indiqué à l'exemple 1, aucun fragment n'est éjecté.

### Exemple 3 :

On opère comme à l'exemple 1, mais le réseau de brins (multifilaments) est constitué par un maillage, les brins parallèles selon les deux directions étant espacés de 4 cm .

Dans cet exemple, l'impact a lieu sur la face ne comprenant pas les brins. L'énergie de l'impact est de 7200 Joules.

L'impact crée, dans la plaque, des lignes de cassure en étoile passant par le point d'impact, et une ligne de fracture périphérique entourant l'ensemble des lignes de cassure en étoile. La ligne de fracture périphérique est découpée, par ses intersections avec les lignes de cassure en étoile, en plusieurs segments consécutifs sensiblement rectilignes qui jouent, chacun, le rôle d'une articulation pour la partie sensiblement triangulaire de la plaque délimitée par cette ligne de fracture et deux lignes de cassure consécutives, après l'impact.

Les brins non cassés, traversant chaque articulation, lui donnent de l'élasticité. Cette élasticité assure le rappel de ladite partie sensiblement triangulaire vers sa position d'origine, après la traversée de la plaque par la masse. La plaque traversée reprend sensiblement sa forme plane initiale.

### Exemple 4

On opère comme à l'exemple 3, mais en utilisant une énergie de 12 000 Joules.

On observe le même type de cassure et fracture avec retour à la position initiale des parties sensiblement triangulaires de la plaque.

## Revendications

1. Plaques antifragmentation en matière polymère thermoplastique comprenant au moins un réseau de brins adhérant à la matière polymère thermoplastique constituant les plaques, chaque brin du réseau étant noyé dans la matière polymère thermoplastique constituant les plaques à proximité immédiate d'au moins une face desdites plaques.

2. Plaques selon la revendication 1, dans lesquelles la distance de la surface de chaque brin par rapport à la face la plus proche est de 0,05 à 4 mm environ.

3. Plaques selon l'une des revendications 1 et 2, dans lesquelles les brins sont constitués chacun d'un enchevêtrement de filaments, ou multifilaments.

4. Plaques selon la revendication 3, dans lesquelles les brins se présentent sous la forme de corde ou de tresse.

5. Plaques selon la revendication 3, dans lesquelles les brins sont constitués d'une âme formée de multifilaments et enserrée dans une gaine formée d'un enchevêtrement de filaments ou multifilaments.

6. Plaques selon l'une des revendications 1 ou 2, dans lesquelles les brins sont constitués de monofilaments formés d'une matière adhérant au polymère thermoplastique constituant les plaques.

7. Plaques selon l'une des revendications 1 à 6, dans lesquelles le réseau est constitué de brins parallèles dans une seule direction.

8. Plaques selon la revendication 7, dans lesquelles les brins sont espacés d'une distance de 10 mm à 300 mm.

9. Plaques selon l'une des revendications 1 à 6, dans lesquelles le réseau est constitué de brins parallèles dans deux directions, formant un maillage.

10. Plaques selon la revendication 9, dans lesquelles la distance entre les brins parallèles selon les deux directions, identique ou différente, est de 10 mm à 300 mm.

11. Plaques selon l'une des revendications 1 à 10 dans lesquelles les brins ont un diamètre de 0,2 à 3 mm, de préférence de 1,5 à 2,5 mm.

12. Plaques selon l'une des revendications 1 à 11 dans lesquelles les brins sont constitués de filaments en matière polymère, métallique ou en matière textile naturelle.

13. Plaques selon l'une des revendications 1 à 12 dans lesquelles la matière polymère thermoplastique les constituant est choisie parmi le polycarbonate, les polymères du méthacrylate de méthyle comportant de 80 à 100 % en poids de méthacrylate de méthyle et de 0 à 20 % en poids d'au moins un monomère ayant au moins une insaturation éthylénique copolymérisable avec le méthacrylate de méthyle.

14. Mur anti-bruit comprenant une plaque antifragmentation conforme à l'une des revendications 1 à 13.

15. Mur anti-bruit selon la revendication 14 dans lequel la plaque a une épaisseur de 10 mm à 25 mm.
